# EUROPEAN PATENT SPECIFICATION

(11) **EP 3 670 582 B1**
(45) Date of publication and mention of the grant of the patent: **20.03.2024**
(21) Application number: 18215266.0
(22) Date of filing: 21.12.2018
(51) Int. Cl.: C08J 5/04, C08J 5/06

(54) **METHOD OF MANUFACTURING A REINFORCEMENT MATERIAL**
VERFAHREN ZUR HERSTELLUNG EINES VERSTÄRKUNGSMATERIALS
PROCÉDÉ DE FABRICATION D'UN MATÉRIAU DE RENFORT

(43) Date of publication of application: 24.06.2020
(73) Proprietor: Indorama Ventures Luxembourg Holding S.A., 8452 Steinfort (LU)
(72) Inventor: Herrero-Acero, Enrique, 1190 Wien (AT); Müller, Bernhard, 2500 Baden (AT)
(74) Representative: CPW GmbH

(56) References cited:
- WO-A1-94/23102
- WO-A1-03/048237
- WO-A1-2005/026239
- WO-A1-2018/055159
- US-A1- 2005 208 284

## Description

The invention relates to a method for manufacturing a reinforcement material, in particular a tire cord or tire cord fabric, whereas a textile fiber cord and/or paper containing aramid is being provided, and the fiber and/or cord is treated for a contact with a latex/rubber matrix.

Such textile cords have been widely used as reinforcement materials in radial tires, conveyor belts, hoses or driving belts. The reinforcing character of the material is mainly effected by the structure of the cord consisting of several filaments being twisted together. Besides such more or less linear cord structures (so called "single end cords"), cords can also be used in the form of laminar structures, e.g. as woven structures. In other applications as constructive building or aerospace, also paper structures can be used, e.g. in the form of honeycombs.

Generally, filaments can be made of different types of synthetic high-tenacity polymeric fibers like e.g. polyester, aromatic or aliphatic polyamides like Aramid or Nylon, respectively, but also of regenerated cellulose fibers. Fiber blends e.g. commingled yarns or hybrid constructions of different fiber types can also be used as well as monofilament constructs of one fiber type wrapped with filaments of another fiber type. Due to the different chemical structure of the polymer fiber, those reinforcement materials show different adhesive properties with respect to the rubber to which they are bonded in a curing step, like in the case of tire rubber vulcanization.

It is of course the intention to have a strong bonding between the textile cord and the rubber in order to guarantee structural integrity of the tire in use and to avoid separation of the cord from the rubber.

In order to improve the adhesion between the textile cord and the tire rubber during the vulcanization process, currently the cord is dipped with a mixture, mostly comprising Resorcinol, Formaldehyde and Latex (RFL-dip), before vulcanization. In many cases - depending on the nature of the fibers used - the effect of said RFL-dipping solution is not sufficient to guarantee an adequate adhesion between the tire cord and the rubber due to limited nature of the adhesive forces between the fiber/cord surface and the rubber to electrostatic or weak interactions. This is for instance the case for aramid and polyester cords, and their combinations (e.g. hybrids, comingling).

In order to overcome this drawback it is known to apply a pre-dip coating consisting of in particular a mixture of blocked isocyanates and low molecular epoxides to the fiber, followed by the said RFL-dip, as described in Handbook of Rubber Bonding, Brian G. Crowther, Rapra Technology, 2003, p. 246. The adhesion of the cord dipped in such a "two baths"-process is now stronger than the one of a cord coated with said RFL-dip alone. However, the additional pre-dipping step leads to the unwanted effect of an increased weight of the dipped cord, besides higher process complexity and higher costs compared to single-bath dipping with an RFL dip only.

Alternatively, plasma treatment methods using e.g. plasma have been applied for surface modification of aramid fibers in order to improve their hydrophilicity and therefore adhesion of the cord to the RFL dip and rubber, respectively. Since many plasma treatment methods have an etching effect on the fiber, morphological and topological changes are not limited to the fiber surface but can also occur inside of the fiber which can result in a weakening of physical fiber properties e.g. breaking force and tenacity.

Further, enzymatic treatment of the fibers are known with for example laccase, which is described in DE 10 2016 011 645 A1. Document WO 2018 055 159 A1 discloses a textile reinforcement material comprising aramide fibers with carboxyl attachment points for the coupling of the rubber matrix material.

It is an object of the invention to provide a method as introduced above in such a way that the aramid fibers have improved adhesion properties to the rubber matrix while the method has satisfyingly low complexity and overcomes at least some of the previously mentioned problems.

This object is achieved by a method with the features of claim 1. Preferable further embodiments are given in the sub-claims.

For instance, by contact of the chemical actuator, new hydrophilic groups in an amount of more than additional 3%, preferably more than additional 10%, in particular more than additional 25% are generated. In other words, said hydrophilic groups generated by said contact of the chemical actuator are in an amount of more than additional 3%, preferably more than additional 10%, in particular more than additional 25% with respect to the hydrophilic groups already present at the surface of the body before said surface treatment.

Further, the invention is directed also to the reinforcement material itself, and to rubber products and composite structural parts containing such reinforcement material, and to an installation performing the method.

In the following, further explanations about the invention are given and further embodiments, details, and examples are proposed. The "aramid containing body" is, therein, sometimes simplified to read "aramid body" or just "body".

According to the invention, one can achieve by electrochemical generation of active hydrophilic groups (preferably carboxyl) on the surface of f.i. the tire cord or its twisted multifilaments, respectively, comprising aramid, before coating the tire cord with a dipping solution, in particular a RFL-dip or a RF-free dip. The electrochemical process involves the action of a chemical actuator which acts as redox intermediate.

The fiber/cord can be treated in an electrochemical reactor whereby said actuator/redox mediator present in an aqueous electrolyte is oxidized by applying the voltage between the working electrodes for instance in a three-electrode system. The actuator/mediator therefore acts as an electron shuttle to the fiber surface where the energy introduced breaks up amide bonds on the surface or surface-near areas of the fiber and subsequently generates hydrophilic groups i.a. carboxyl groups. The actuators are then preferably "recharged", f.i. mediator molecules are re-oxidized at the electrode surface and made available again for transporting energy to the fiber surface in a cyclic process.

The combination of the applied voltage and the chemical actuators acting as electron transmitters and band-breaker is found advantageously for a successful generation of active chemical groups on the cord surface. Moreover, via the (switch on/off and value of) applied voltage, easy control of the process is possible.

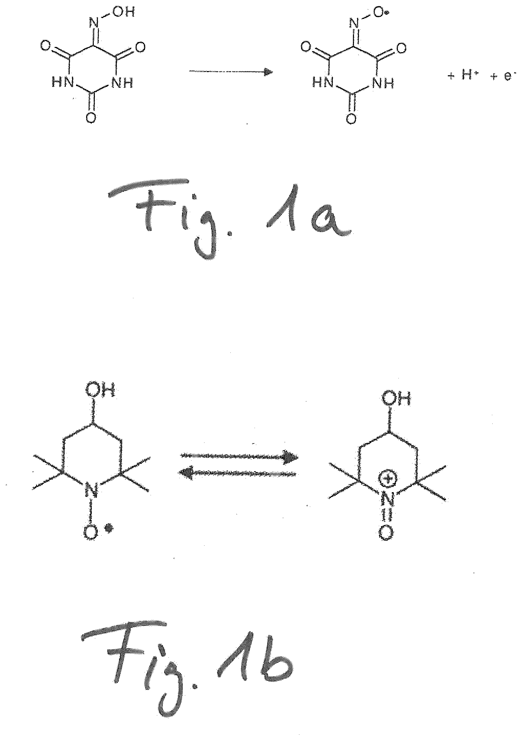

The actuators/redox mediators can comprise nitrosyl radicals and/or oxo-ammonium ions in one of their redox states. Preferably, redox mediators are chosen among substances like -N(OH)- compunds, in particular Violuric acid (VLA), 1-Hydroxy benzotriazole (HBT), 2,2,6,6-tetramethylpiperidin-1-oxyl (TEMPO). Preferred substances are also N-Hydroxy acetanilide (NHA) or N-Hydroxy phtalamide (HPI). Fig. 1a shows the VLA oxidation, Fig. 1b shows the TEMPO oxidation / redox reaction.

The process of the invention can be used to generate active hydrophilic groups on the surface of fibers and cords made of materials which per se do not show good hydrophilic properties. According to the invention, such materials comprise aromatic polyamides (aramids). The fibers, cords and/or the paper can be made exclusively of aramid, however the invention is not restricted to materials consisting of aramid only. Cord constructions can also comprise other fibers of non-aramid material, e.g. regenerated cellulose (Rayon, Lyocell), aliphatic polyamides (e.g. Nylon), Polyesters (e.g. PET, PEN) or other synthetic fibers. Preferably, an aramid - Nylon hybrid cord construction is to be considered as reinforcement material.

Prior to the electrochemical treatment, all substances covering the polymer surface like spin finish and other contaminations are preferably removed from the fiber surface by a combined washing process with a polar solvent (e.g. deionized water) and an apolar or polar aprotic solvent (e.g. dichloromethane). An ineffective washing of the polymer surface may otherwise lead to a lower effectiveness of the activation process.

The electrochemical treatment can take place in a three-electrode system with a working electrode, a counter electrode and a reference electrode immersed in the reaction solution in a batch reactor. The body, f.i cord is preferably immobilized in the reaction vessel, most preferably by winding the cord around an inert support, e.g. a plastic tube or plastic hollow cylinder. This inert support with the cord is immersed in the reaction solution as well. Preferably, the hollow cylinder has perforations to allow a flow of reaction solution through the cylinder to guarantee a good contact of the fibers with the electrolyte. In a preferred way the hollow cylinder has such a diameter that the three electrodes can be arranged in the inner space of the cylinder. Alternatively, the electrodes can be arranged outside of the cylinder.

Before starting the electrochemical treatment of the aramid body for f.i the tire cord, it is of advantage to identify the redox potentials for the oxidation of the actuator in the treating arrangement for the subsequent oxidation of the aramid body surface. To achieve this, cyclovoltammetric measurements of the electrolyte comprising the redox mediator, but without the presence of the cord is being performed in the reaction vessel. From the cyclovoltammetry of the electrochemical treatment solution, the peak potential of the actuator E_{med} is determined. The electrochemical treatment (oxidation) is then carried out at a potential of Eₜᵣₑₐₜ = E_{med} + a (a = 0 to 200 mV being a safety margin, preferably a = 100 ± 50 mV) with a three-electrode arrangement. Respective pre-establishing thereof can also be done in advance / separately, that is the manufacturing method can be performed with previously determined values under comparable conditions as that of the treatment.

The mechanism of the treatment starts to act with applying the voltage and subsequently increases in effect of creating / increasing hydrophilic groups. It allows treatment times of 12h or less or 6h or less, even about 3 h or less, even 2 h or less, even 1 h or less, such that reasonable time scales for industrial mass production are given. Further, treatment time of the aramid body with applied potential Eₜᵣₑₐₜ may be in the minutes regime as 5 minutes or more, 15 minutes or more, or 30 minutes or more.

Before starting the electrochemical treatment of the aramid body, it is preferred to pre-oxidize the actuator by applying the voltage Eₜᵣₑₐₜ to the electrolyte comprising the actuator, but without the aramid body, for a period of ≥ 5 minutes, preferably ≥ 15 minutes, more preferably ≥ 30 or even up to 60 minutes or more. After this pre-oxidation step, the treatment effect to (activation of) the aramid body starts more rapidly when immersing the immobilized or moving aramid body in the reaction solution with the pre-oxidized actuators (mediator molecules). Preferably, applying the voltage Eₜᵣₑₐₜ continues after immersion of the cord.

Preferably, the electrochemical oxidation of the actuator and the activation of the aramid body as f.i a cord by the oxidized actuator molecules take place in the same reaction vessel.

In a different embodiment, the electrochemical oxidation of the actuator and the activation of the body for f.i the tire cord are foreseen as a two stage process in two different vessels. In the first vessel equipped with the electrode system, f.i. comprising three electrodes, the oxidation of the substance with the actuator molecules takes place. The reaction solution comprising the oxidized molecules is then being fed continuously or discontinuously to a separate vessel containing the aramid body to be activated. After the activation of the cord the exhausted mediator solution (containing "consumed" actuator molecules in the lower energy state) can then be recirculated to the electrochemical cell for recurrent oxidation.

in a further preferred embodiment, the electrochemical treatment process can also be done in a continuous mode where the aramid body for f.i the tire cord is guided through the electrochemical reactor with the voltage Eₜᵣₑₐₜ applied, with a speed matching the desired contacting time for the formation of hydrophilic groups on the cord surface. The treated cord can then be continuously fed - after passing optional washing and drying steps - to the dipping line to apply the dip (giving the matrix) on the in this example treated aramid cord.

The electrolyte used for both the cyclovoltammetric measurements and the electrochemical treatment may comprise well-known inorganic or organic conducting substances such as sodium sulfate, sodium hydrogen sulfate, sodium or potassium nitrate, succinic acid etc. The pH of the electrolyte is preferably in a range of 2,5 to 8, preferably 3,5 to 5. Preferably the electrolyte comprises a buffer system as conducting substance to avoid pH-shifting during the electrochemical treatment.

As electrode materials for the working and the counter electrode, all materials being inert under the applied treatment conditions (pH, potential) can be used. Materials for the working and counter electrode can be chosen out of platinum, platinized titanium, titanium or stainless steel. Working and counter electrode can also consist of different materials. Preferably, the reference electrode is a Ag/AgCl/KCl electrode known to a person skilled in the art. Other reference electrode systems (e.g. Hg-based) can also be used.

The amount of newly formed carboxyl groups on the surface of the fiber materials can be (and was) determined by quantifying the amount of bound toluidine blue O (TBO) molecules of an electrochemically treated body as f.i the cord and an untreated body (cord) as reference.

For the quantification of surface carboxyl groups, 2mM TBO solution were freshly prepared in 0.1M Tris/HCl buffer at pH 8.6. 3 meter of the fiber material was immersed in the solution for 15 min at 50°C and stirring. The supernatants were removed and the unbound TBO molecules were removed by washing with 0.1M Tris/HCl buffer solution. The washing process was repeated until the supernatants were clear. Finally, TBO was desorbed by immersing the body with the contained fibers in 50ml of 5% SDS solution (pH = 4.6) for 60 min at 50°C while stirring. The TBO adsorption of SDS supernatants was measured at 639 nm and 23°C. To calculate the concentration, a calibration curve was determined. For this a TBO standard solution (TBO dissolved in 5% SDS solution) of known concentration was diluted (9.2, 4.6, 2.3, 0.92 and 0.46 pmol/L) and the absorbance was also measured at 639 nm. Using the calibration curve and including the fiber weight, the amount of newly formed carboxyl groups per gram of fiber was calculated.

For an adhesion test, 40 m of untreated aramid cord (as a reference) and electrochemically treated aramid cord samples were subjected to a standard RFL-dip procedure. The determination of the adhesion of the dipped cords was done with the "H-Test" method according to ASTM D4776 (Standard Test Method for Adhesion of Tire Cords and Other Reinforcing Cords to Rubber Compounds by H-Test Procedure). As a rubber compound, a calendered neutral rubber material (Product code 01-0-1830-350 from QEW Engineered Rubber B.V., The Netherlands) was used.

In the following, some exemplary embodiments are presented in more detail: 3 meter of Aramid cord (Twaron Type 1000 from Teijin, 1680x2 dtex, twist level 315x315 tpm) were wound in a single layer around a cylindrical, non-perforated polypropylene tube with a length of 15 cm and a diameter of 3,2 cm. The tube with the immobilized cord was washed for 30 minutes in deionized water, then for 10 minutes in dichloromethane, followed by another washing step with deionized water for 10 minutes. The whole washing procedure was performed under stirring at room temperature. After the last washing step, the cords were dried in an oven at 55 +/- 5°C for 1 hour.

For the reaction solution 500 ml of a solution of 0.1 M succinic acid were prepared and adjusted with 0.1 M NaOH to pH 5 as electrolyte. Subsequently, VLA as chemical actuator was added and dissolved by stirring to reach a concentration of 40 mM VLA in the solution. After dissolution of the VLA, the pH was readjusted to a value of 5 with 0.1 M NaOH.

The working and counter electrode used were (50 x 10) mm platinum sheets with an active electrode surface area of 2 cm² (active electrode surface area determined by masking the corresponding active electrode surface with a galvanic tape). The reference electrode was a Ag/AgCI/3M KCI electrode. All electrodes were immersed in the electrolyte and cyclovoltammogramms were recorded to determine the peak potential of VLA. Cyclovoltammetric measurements were carried out at a scan rate of 50 mV/s.

The Eₜᵣₑₐₜ of here 1,14 V (measured vs. the Ag/AgCl reference electrode and being 0,1 V more than the determined peak potential) was applied for 60 min to the treatment solution without the cord with the fibers in order to pre-oxidize the VLA. After 60 minutes, the tube with the washed, dried Aramid cord was immersed in the treatment solution under continuation of the applied voltage Eₜᵣₑₐₜ. After 60 minutes of treatment, the fibers were removed and washed with deionized water. After the rinsing process the cord was unwound from the tube and determination of carboxyl groups on the cord surface via TBO method was carried out.

As a reference, aramid cord samples were immersed in the electrolyte containing 0.1 M succinate buffer at pH=5 and 40 mM of VLA for 60 minutes without applying any voltage between the electrodes. The TBO values of these reference cords were compared with the TBO values of cords after an electrochemical treatment. Thereby, newly formed carboxyl groups of 0,11 µmol/g cord were determined, corresponding to a relative increase of about 33%.

The increase was confirmed in a further embodiment, slightly modified with higher active electrode surface of 15 cm² and higher Eₜᵣₑₐₜ of 1,39 V (adapted to the peak potential of the actuator in this configuration). Further increase up to even slightly over 0,3 µmol/g of newly formed carboxyl groups were found for higher (doubled) treatment times. Saturation effects were observed to occur rather soon, no substantial increase was found for longer treatment times and even for long-term tests of 18 h treatment. Even for treatment times of few minutes, a measurement with the above set-up resulted in an effect of several percent up to 10 % relative improvement and even more for 20 minutes treatment time.

Since for the adhesion measurements, a longer cord length of 40 m is necessary to perform the dipping, in a further exemplary process 40 meter of Aramid cord (Twaron Type 1000 from Teijin,1680x2 dtex, twist level 315x315 tpm) were wound in a single layer around a cylindrical polypropylene tube with a length of 21 cm, an outer diameter of 9 cm and a wall thickness of 1,8 cm. The surface of the tube was completely perforated with holes each with a diameter of 5 mm to facilitate the flow of the washing and/or the reaction solution through the tube in order to contact the cord from all sides. The tube with the immobilized cord was washed for 30 minutes in deionized water, then for 10 minutes in dichloromethane, followed by another washing step with deionized water for 10 minutes. The whole washing procedure was performed under stirring at room temperature. After the last washing step, the cords were dried in an oven at 55 +/- 5°C for 1 hour.

For the reaction solution 2 liters of a solution of 0.1 M succinic acid were prepared and adjusted with 0.1 M NaOH to pH 5 as electrolyte. Subsequently, VLA as mediator was added and dissolved by stirring to reach a concentration of 40 mM VLA in the solution. After dissolution of the VLA, the pH was readjusted a value of 5 with 0.1 M NaOH.

The working and counter electrode used were platinum-coated titanium mesh electrodes with a dimension of 95 mm x 30 mm and an active electrode surface area of 15 cm². The reference electrode was a Ag/AgCl/3M KCI electrode. All electrodes were immersed in the electrolyte and cyclovoltammogramms were recorded to determine the peak potential of VLA. Cyclovoltammetric measurements were carried out at a scan rate of 50 mV/s.

The Eₜᵣₑₐₜ of here 1,32 (measured vs. the Ag/AgCI reference electrode and being again 0,1 V higher than the peak potential) was applied for 60 min to the treatment solution without fibers in order to pre-oxidize the VLA. After 60 minutes, the tube with the washed, dried Aramid cord was immersed in the treatment solution under continuation of the applied voltage Eₜᵣₑₐₜ. After 60 minutes of treatment, the fibers were removed and washed with deionized water. After the rinsing process the cord was unwound from the tube, dipped with a standard RFL dip and subsequently the adhesion tests were carried out. As a reference thereof, aramid cord samples were immersed in the electrolyte containing 0.1 M succinate buffer at pH=5 and 40 mM of VLA for 60 minutes without applying any voltage between the electrodes.

The results of the adhesion measurements ("H-Test" results") showed an increase in the Force (N) according ASTM D4776 from the reference of 121 N to the electrochemically treated cord of 137 N. Also here TBO values of these reference cords were compared with the TBO values of this cord (after an electrochemical treatment of 60 minutes) with roughly 10% relative increase in the carboxyl group concentration.

Further test series for the adhesion measurements with different treatment times showed again an increase in the Force (ASTM D4776) with increased treatment times and a saturation effect. Also with view to a second reference where a pre-dip as initially discussed was applied, the method of the claimed invention can clearly compete (confirmed by reaching a value of 98% of the Force (ASTM D4776) of the second reference 155N vs. 157N) with this prior art method but avoiding the pre-dip and related weight increase / other disadvantages thereof.

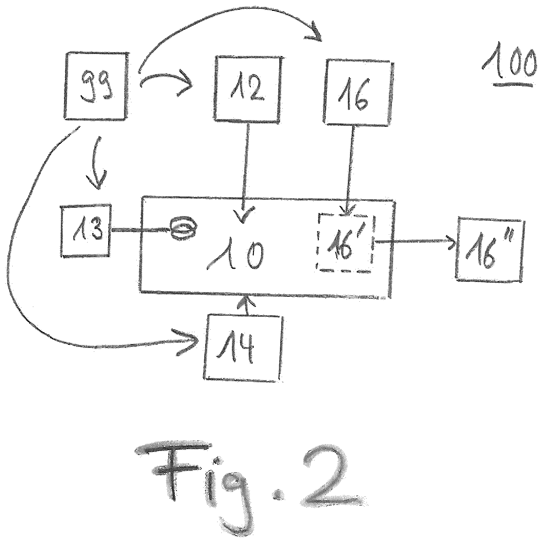

Fig. 2 shows schematically an installation to perform the method. A reactor 10 is provided containing an electrolyte. As indicated in Fig. 2, chemical activator 12 is added to the electrolyte, and a stirring unit 13 is provided to prepare the treatment solution. Oxidation of the chemical actuators is done via energy source 14 in form of applying voltage Eₜᵣₑₐₜ. Reference numeral 16 denotes the aramid body before (16) immersed in vessel 10, inside (16') vessel 10 during treatment and taken out (16") after treatment. A control device 99 is provided to control the discussed units for the process when executed in automatic or semi-automatic manner.

The above examples of electrochemically activated cord sample via increase of hydrophilic group concentration compared to a non-activated cord, exemplify the effect of hydrophilisation of the surface of the aramid cord by the electrochemical process. The adhesion results confirm that the hydrophilic groups generated on the cord surface provided an increased bonding strength between the cord surface and the RFL-dip and the rubber, respectively.

## Claims

1. Method of manufacturing a reinforcement material, in particular a tire cord or a tire cord fabric, said reinforcement material comprising a latex-, rubber- or resin-matrix and a body containing aramid at least at its surface, the body being in particular a textile fiber, cord and/or paper, the body being connected to the matrix via hydrophilic, in particular carboxylic groups at said surface, the method comprising the steps of
- providing the matrix material,
- providing the aramid containing body,
- performing a treatment of the surface of the aramid containing body,
- contacting the body having the treated surface with the matrix material to form their connection,
**characterized in that** the treatment comprises
- providing electrical energy by applying a voltage,
- using at least part of the provided electrical energy to modify said surface for creation of hydrophilic groups and/or increase of the density of the hydrophilic groups by energy transfer to the aramid containing body,
wherein said energy transfer comprises
- exciting chemical actuators in an electrochemical reaction caused by the applied voltage into a second state of higher energy with respect to a first state of lower energy,
- providing contact of the excited actuators with the surface of the aramid containing body.

2. Method according to claim 1, wherein the creation or density increase of hydrophilic groups is obtained by breaking bonds at the surface of the body, said bonds being broken by the chemical actuators which thereby leave their second state and in particular return to their first state.

3. Method according to claim 2, wherein a cycle of said chemical actuators of excitation into the second state and returning into a state of lower energy, in particular into the first state is performed repeatedly, in particular in one common location, in particular a vessel.

4. Method according to any of claims 1 to 3, wherein, for the excitation into the second state, the chemical actuators are in an aqueous electrolyte of an electrochemical reactor (10) containing working electrodes, the applied voltage being between said working electrodes.

5. Method according to any of the preceding claims, wherein the chemical actuator is a redox-active mediator capable of shuttling electrons to the body, and in particular is or contains a -N(OH)- compound.

6. Method according to any of the proceeding claims, wherein the applied voltage (Eₜᵣₑₐₜ) is set to a redox peak potential of the actuator or an amount higher, said redox peak potential being preferably determined before the treatment in essentially the conditions of actuator excitation of the treatment.

7. Method according to any of the proceeding claims, wherein the body is subject to one or more washing steps before treatment.

8. Method according to any of the proceeding claims, wherein, before the body is subject to the contact with the actuator, the step of exciting the actuator is started beforehand as a pre-activation step.

9. Method according to any of the proceeding claims, wherein the treatment time is preferably 12 h or lower, even 6 h or lower or even 3 h or lower.

10. Method according to any of the preceding claims, wherein said hydrophilic groups generated by said contact of the chemical actuator are in an amount of more than additional 3%, preferably more than additional 10%, in particular more than additional 25% with respect to the hydrophilic groups already present at the surface of the body before said surface treatment.

11. Method according to any of the preceding claims, wherein the body comprises a composite of aramid and at least a further fiber and/or matrix material, in particular nylon.

12. Installation (100) for an automatically or semi-automatically controlled manufacturing according to any of claims 1 - 11, comprising an electrochemical reactor (10), a source (14) of electrochemical energy to apply a voltage in the reactor, a first supply for providing an aqueous electrolyte including the chemical actuator, a second supply (16) to bring the body in the reactor (10) or to fed it through the reactor (10), and a control unit (99) with a control program controlling the installation to perform the method according to any of the claims 1-11 when executed on the control unit (99).

## Patentansprüche

1. Verfahren zum Herstellen eines Verstärkungsmaterials, insbesondere eines Reifencords oder eines Reifencordgewebes, wobei das Verstärkungsmaterial eine Latex-, Gummi- oder Harzmatrix und einen zumindest an seiner Oberfläche Aramid enthaltenden Körper umfasst, wobei der Körper insbesondere eine Textilfaser, ein Cord und/oder Papier ist, wobei der Körper mittels hydrophiler, insbesondere Carbonsäuregruppen an der Oberfläche mit der Matrix verbunden ist, wobei das Verfahren die folgenden Schritte umfasst:
- Bereitstellen des Matrixmaterials,
- Bereitstellen des Aramid enthaltenden Körpers,
- Durchführen einer Behandlung der Oberfläche des Aramid enthaltenden Körpers,
- In-Kontakt-Bringen des die behandelte Oberfläche aufweisenden Körpers mit dem Matrixmaterial, um ihre Verbindung zu bilden,
**dadurch gekennzeichnet, dass** die Behandlung Folgendes umfasst:
- Bereitstellen elektrischer Energie durch Anlegen einer Spannung,
- Verwenden zumindest eines Teils der bereitgestellten elektrischen Energie, um die Oberfläche zur Erzeugung hydrophiler Gruppen zu modifizieren und/oder die Dichte der hydrophilen Gruppen durch Energieübertragung auf den Aramid enthaltenden Körper zu erhöhen,
wobei die Energieübertragung Folgendes umfasst:
- Anregen chemischer Aktoren in einer elektrochemischen Reaktion, die durch die angelegte Spannung bewirkt wird, in einen zweiten Zustand mit höherer Energie gegenüber einem ersten Zustand mit niedrigerer Energie,
- Bereitstellen von Kontakt der angeregten Aktoren mit der Oberfläche des Aramid enthaltenden Körpers.

2. Verfahren nach Anspruch 1, wobei die Erzeugung oder Dichteerhöhung hydrophiler Gruppen durch Aufbrechen von Bindungen an der Oberfläche des Körpers erhalten wird, wobei die Bindungen durch die chemischen Aktoren aufgebrochen werden, die dadurch ihren zweiten Zustand verlassen und insbesondere zu ihrem ersten Zustand zurückkehren.

3. Verfahren nach Anspruch 2, wobei ein Zyklus der chemischen Aktoren von Anregung zu dem zweiten Zustand und dem Rückkehren zu einem Zustand niedrigerer Energie, insbesondere zu dem ersten Zustand, wiederholt durchgeführt wird, insbesondere an einem gemeinsamen Ort, insbesondere einem Gefäß.

4. Verfahren nach einem der Ansprüche 1 bis 3, wobei die chemischen Aktoren für die Anregung zu dem zweiten Zustand in einem wässrigen Elektrolyten eines elektrochemischen Reaktors (10) vorliegen, der Arbeitselektroden enthält, wobei die angelegte Spannung zwischen den Arbeitselektroden vorliegt.

5. Verfahren nach einem der vorstehenden Ansprüche, wobei der chemische Aktor ein redoxaktiver Mediator ist, der Elektronen an den Körper übertragen kann, und insbesondere eine -N(OH)-Verbindung ist oder enthält.

6. Verfahren nach einem der vorstehenden Ansprüche, wobei die angelegte Spannung (E_{Behand}) auf ein Redox-Spitzenpotential des Aktors oder einen höheren Betrag eingestellt wird, wobei das Redox-Spitzenpotential bevorzugt vor der Behandlung, im Wesentlichen unter den Bedingungen der Aktoranregung der Behandlung, bestimmt wird.

7. Verfahren nach einem der vorstehenden Ansprüche, wobei der Körper vor der Behandlung einem oder mehreren Waschschritten unterzogen wird.

8. Verfahren nach einem der vorstehenden Ansprüche, wobei, bevor der Körper dem Kontakt mit dem Aktor unterzogen wird, der Schritt des Anregens des Aktors zuvor als ein Voraktivierungsschritt begonnen wird.

9. Verfahren nach einem der vorstehenden Ansprüche, wobei die Behandlungszeit bevorzugt 12 Stunden oder weniger, sogar 6 Stunden oder weniger oder sogar 3 Stunden oder weniger beträgt.

10. Verfahren nach einem der vorstehenden Ansprüche, wobei die hydrophilen Gruppen, die durch den Kontakt des chemischen Aktors generiert werden, in Bezug auf die hydrophilen Gruppen, die bereits vor der Oberflächenbehandlung an der Oberfläche des Körpers vorhanden waren, in einer Menge von mehr als zusätzlichen 3 %, bevorzugt mehr als zusätzlichen 10 %, insbesondere mehr als zusätzlichen 25 % vorliegen.

11. Verfahren nach einem der vorstehenden Ansprüche, wobei der Körper einen Verbundstoff aus Aramid und zumindest einer weiteren Faser und/oder einem weiteren Matrixmaterial, insbesondere Nylon, umfasst.

12. Anlage (100) für ein automatisch oder halbautomatisch gesteuertes Herstellen nach einem der Ansprüche 1 - 11, umfassend einen elektrochemischen Reaktor (10), eine Quelle (14) elektrochemischer Energie, um eine Spannung in dem Reaktor anzulegen, eine erste Zufuhr zum Bereitstellen eines wässrigen Elektrolyten einschließlich des chemischen Aktors, eine zweite Zufuhr (16), um den Körper in den Reaktor (10) zu bringen oder ihn durch den Reaktor (10) zu führen, und eine Steuereinheit (99) mit einem Steuerprogramm, das die Anlage steuert, um das Verfahren nach einem der Ansprüche 1 - 11 durchzuführen, wenn es auf der Steuereinheit (99) ausgeführt wird.

## Revendications

1. Procédé de fabrication d'un matériau de renfort, en particulier d'un câble pour pneu ou d'un tissu de câble pour pneu, ledit matériau de renfort comprenant une matrice de latex, de caoutchouc ou de résine et un corps contenant de l'aramide au moins au niveau de sa surface, le corps étant en particulier un textile fibre, un câble et/ou du papier, le corps étant relié à la matrice par le biais de groupes hydrophiles, en particulier carboxyliques au niveau de ladite surface, le procédé comprenant les étapes consistant à
- fournir le matériau de matrice,
- fournir le corps contenant de l'aramide,
- effectuer un traitement de la surface du corps contenant de l'aramide,
- mettre en contact le corps présentant la surface traitée avec le matériau de matrice pour former leur liaison,
**caractérisé en ce que** le traitement comprend
- la fourniture d'énergie électrique par application d'une tension,
- l'utilisation d'au moins une partie de l'énergie électrique fournie pour modifier ladite surface pour la création de groupes hydrophiles et/ou une augmentation de la densité des groupes hydrophiles par transfert d'énergie vers le corps contenant de l'aramide,
dans lequel ledit transfert d'énergie comprend
- l'excitation d'actionneurs chimiques dans une réaction électrochimique provoquée par la tension appliquée dans un second état d'énergie supérieure par rapport à un premier état d'énergie inférieure,
- la fourniture d'un contact des actionneurs excités avec la surface du corps contenant de l'aramide.

2. Procédé selon la revendication 1, dans lequel la création ou l'augmentation de densité de groupes hydrophiles est obtenue par rupture de liaisons au niveau de la surface du corps, lesdites liaisons étant rompues par les actionneurs chimiques qui sortent ainsi de leur second état et, en particulier, reviennent à leur premier état.

3. Procédé selon la revendication 2, dans lequel un cycle desdits actionneurs chimiques d'excitation dans le second état et de retour dans un état d'énergie inférieure, en particulier dans le premier état, est effectué de manière répétée, en particulier dans un endroit commun, en particulier une cuve.

4. Procédé selon l'une quelconque des revendications 1 à 3, dans lequel, pour l'excitation dans le second état, les actionneurs chimiques sont dans un électrolyte aqueux d'un réacteur électrochimique (10) contenant des électrodes de travail, la tension appliquée étant entre lesdites électrodes de travail.

5. Procédé selon l'une quelconque des revendications précédentes, dans lequel l'actionneur chimique est un médiateur rédox-actif qui peut transporter des électrons vers le corps et, en particulier, est ou contient un composé -N(OH)-.

6. Procédé selon l'une quelconque des revendications précédentes, dans lequel la tension appliquée (Eₜᵣₑₐₜ) est réglée à un potentiel de pic redox de l'actionneur ou à une valeur supérieure, ledit potentiel de pic redox étant, de préférence, déterminé avant le traitement essentiellement dans les conditions d'excitation d'actionneur du traitement.

7. Procédé selon l'une quelconque des revendications précédentes, dans lequel le corps est soumis à une ou plusieurs étapes de lavage avant traitement.

8. Procédé selon l'une quelconque des revendications précédentes, dans lequel, avant que le corps ne soit soumis au contact avec l'actionneur, l'étape d'excitation de l'actionneur est démarrée au préalable en tant qu'étape de pré-activation.

9. Procédé selon l'une quelconque des revendications précédentes, dans lequel la durée de traitement est, de préférence, 12 h ou moins, voire 6 h ou moins ou voire 3 h ou moins.

10. Procédé selon l'une quelconque des revendications précédentes, dans lequel lesdits groupes hydrophiles générés par ledit contact de l'actionneur chimique sont en une quantité de plus de 3 % supplémentaires, de préférence de plus de 10 % supplémentaires, en particulier de plus de 25 % supplémentaires par rapport aux groupes hydrophiles déjà présents au niveau de la surface du corps avant ledit traitement de surface.

11. Procédé selon l'une quelconque des revendications précédentes, dans lequel le corps comprend un composite d'aramide et au moins une fibre et/ou un matériau de matrice supplémentaire, en particulier du nylon.

12. Installation (100) pour une fabrication à commande automatique ou semi-automatique selon l'une quelconque des revendications 1 à 11, comprenant un réacteur électrochimique (10), une source (14) d'énergie électrochimique pour appliquer une tension dans le réacteur, une première alimentation pour fournir un électrolyte aqueux incluant l'actionneur chimique, une seconde alimentation (16) pour amener le corps dans le réacteur (10) ou pour l'acheminer à travers le réacteur (10), et une unité de commande (99) avec un programme de commande commandant l'installation pour exécuter le procédé selon l'une quelconque des revendications 1 à 11 lorsqu'il est exécuté sur l'unité de commande (99).
